# EUROPEAN PATENT APPLICATION

(11) **EP 4 806 750 A1**
(43) Date of publication of application: **16.09.2026**
(21) Application number: 24896733.3
(22) Date of filing: 29.11.2024
(51) Int. Cl.: B60W 50/08, B60W 40/08, B60R 16/037

(54) **CARSICKNESS PREVENTION METHOD AND APPARATUS, AND VEHICLE**

(30) Priority: 30.11.2023 CN 202311633522
(71) Applicant: Yinwang Intelligent Technologies Co., Ltd., Shenzhen, Guangdong 518110 (CN)
(72) Inventor: CHEN, Yueshuang, Shenzhen, Guangdong 518110 (CN); YAO, Zhuxi, Shenzhen, Guangdong 518110 (CN); ZHANG, Bingjian, Shenzhen, Guangdong 518110 (CN); HU, Kun, Shenzhen, Guangdong 518110 (CN)
(74) Representative: Henselmann, Alexander Gerhard
(86) International application number: PCT/CN2024/135727
(87) International publication number: WO 2025/113653

(57) **Abstract**

A carsickness prevention method is disclosed. The method may be applied to intelligent vehicles or electric vehicles. The method includes: obtaining motion information of a vehicle (100), road condition information, and physiological feature information of a user; and controlling, based on the motion information, the road condition information, and the physiological feature information, a carsickness prevention device in the vehicle (100) to perform a corresponding operation. This helps relieve a carsickness symptom of the user, thereby helping improve driving and riding experience of the user.

## Description

This application claims priority to Chinese Patent Application No. 202311633522.0, filed with the China National Intellectual Property Administration on November 30, 2023 and entitled "CARSICKNESS PREVENTION METHOD AND APPARATUS, AND VEHICLE", which is incorporated herein by reference in its entirety.

### TECHNICAL FIELD

This application relates to the field of intelligent vehicles, and more specifically, to a carsickness prevention method and apparatus, and a vehicle.

### BACKGROUND

Carsickness is a common physiological phenomenon. When experiencing carsickness, users are prone to discomfort symptoms, for example, dizziness, nausea, or vomiting, which greatly affects physical and mental health and driving and riding safety of the users. With development of electric vehicles, regeneration and acceleration capabilities of vehicles are stronger, making the users more prone to the carsickness symptoms. In this case, how to relieve the carsickness symptoms of the users becomes an urgent problem to be resolved.

### SUMMARY

This application provides a carsickness prevention method and apparatus, and a vehicle, to help relieve a carsickness symptom of a user, thereby helping improve driving and riding experience of the user.

According to a first aspect, a carsickness prevention method is provided. The method includes: obtaining motion information of a vehicle, road condition information, and physiological feature information of a user; and controlling, based on the motion information, the road condition information, and the physiological feature information, a carsickness prevention device in the vehicle to perform a corresponding operation.

According to the foregoing technical solution, multi-dimensional data (the motion information, the road condition information, and the physiological feature information) detection may be performed during traveling of the vehicle, and the carsickness prevention device in the vehicle is controlled based on the multi-dimensional data to perform the corresponding operation. In this way, a carsickness degree of the user or a level of need of the user for carsickness relief can be more accurately identified. This helps relieve a carsickness symptom of the user in a timely manner, thereby helping improve driving and riding experience of the user.

In some possible implementations, the motion information includes one or more of data collected by an acceleration sensor of the vehicle, seat pressure of a seat, data collected by a speed sensor, a pedal signal, a steering wheel angle, and an angular velocity.

In some possible implementations, the data collected by the acceleration sensor may include an acceleration signal of an air suspension system or an acceleration signal of electronic stability control (electronic stability control, ESC).

In some possible implementations, the motion information includes a motion sickness dose value (motion sickness dose value, MSDV). For example, the vehicle may determine the MSDV based on the data collected by the acceleration sensor.

In some possible implementations, the physiological feature information includes one or both of information that can represent a carsickness degree, for example, a heart rate, blood oxygen saturation, and electroencephalogram of the user and facial feature information or voice information of the user. For example, the facial feature information may include facial feature information such as yawning, nausea, vomiting, and eye movement of the user. For another example, the voice information may include key phrases about carsickness, for example, "I feel a bit dizzy".

In some possible implementations, obtaining the physiological feature information includes: obtaining physiological feature information sent by a wearable device.

In some possible implementations, obtaining the physiological feature information includes: determining the physiological feature information based on data collected by a sensor in a cabin. The sensor in the cabin includes one or more of a camera, a radar, and a microphone in the cabin.

In some possible implementations, the road condition information may include information about a road section on which the vehicle is currently located, for example, a location and a type of the road section on which the vehicle is currently located.

In some possible implementations, obtaining the road condition information includes: determining the road condition information based on data collected by a sensor outside the cabin; or determining the road condition information based on navigation information. For example, the sensor outside the cabin includes a camera and a radar outside the cabin.

In some possible implementations, obtaining the road condition information includes: determining the road condition information based on the navigation information.

With reference to the first aspect, in some implementations of the first aspect, the carsickness prevention device includes a plurality of devices. Controlling, based on the motion information, the road condition information, and the physiological feature information, the carsickness prevention device in the vehicle to perform the corresponding operation includes: controlling, based on whether the motion information, the road condition information, and the physiological feature information satisfy a preset condition, at least a part of the plurality of devices to perform the corresponding operation.

According to the foregoing technical solution, in different scenarios, the vehicle may control different devices to perform the carsickness prevention operation. In this way, through control of individual devices, the operation performed by the carsickness prevention device can better meet a current scenario of the user. This helps improve intelligence of the vehicle, and thereby helping improve driving and riding experience of the user.

In some possible implementations, the preset condition includes a preset condition for running information, a preset condition for road condition information, and a preset condition for physiological feature information.

For example, the preset condition for the running information includes but is not limited to at least one of the following: Voice information sent by the user includes the key phrases about carsickness; a heart rate fluctuation amplitude of the user is greater than or equal to a first preset amplitude; a heart rate variability time-domain indicator of the user decreases by a change amplitude greater than or equal to a first preset amplitude; a heart rate variability low-frequency component of the user increases by an increase amplitude greater than or equal to a third preset amplitude; a heart rate variability high-frequency component of the user decreases by a decrease amplitude greater than or equal to a fourth preset amplitude; or the user performs an action, for example, yawning, feeling nauseous, or vomiting.

For another example, the preset condition for the road condition information includes but is not limited to at least one of the following: The vehicle is on a continuous curve; and the vehicle is on a damaged road or a construction road section.

For another example, the preset condition for the physiological feature information includes but is not limited to at least one of the following: A quantity of times that the vehicle experiences sudden acceleration, sudden deceleration, or sharp steering within preset duration is greater than or equal to a preset quantity of times; and the MSDV is greater than or equal to a preset threshold.

With reference to the first aspect, in some implementations of the first aspect, the plurality of devices include a vehicle body control apparatus, a display apparatus, and a passenger environment device. Controlling, based on whether the motion information, the road condition information, and the physiological feature information satisfy the preset condition, at least the part of the plurality of devices to perform the corresponding operation includes: when the physiological feature information satisfies the preset condition, controlling the vehicle body control apparatus, the display apparatus, and the passenger environment device to perform the corresponding operation.

According to the foregoing technical solution, the physiological feature information may be set to have a highest priority. When the physiological feature information satisfies the preset condition, the vehicle body control apparatus, the display apparatus, and the passenger environment device may be directly controlled to perform the corresponding carsickness prevention operation without detecting other data. In this way, it can be ensured that, when the user has an obvious carsickness symptom (for example, the voice information and the facial feature information indicate that the user experiences carsickness), the plurality of devices is immediately controlled to perform a response operation. This helps ensure that the carsickness symptom of the user is relieved in a timely manner, and thereby helping improve the driving and riding experience of the user.

In some possible implementations, different preset conditions for the physiological feature information may correspond to different priorities.

For example, a priority of the preset condition that the voice information sent by the user includes the key phrases about carsickness is high. For another example, a priority of the preset condition that the user performs the action, for example, yawning, feeling nauseous, or vomiting is medium. For another example, a priority of the preset condition that the heart rate fluctuation amplitude of the user is greater than or equal to the first preset amplitude is low.

When the physiological feature information satisfies different preset conditions, different devices may be controlled to perform corresponding carsickness prevention operations. For example, when it is detected that the voice information of the user includes the key phrases about carsickness, the vehicle body control apparatus, the display apparatus, and the passenger environment device may be controlled to perform the corresponding operation. For another example, when it is detected that the user performs the action, for example, yawning, feeling nauseous, or vomiting, the vehicle body control apparatus and the passenger environment device may be controlled to perform the corresponding operation. For another example, when it is detected that the heart rate fluctuation amplitude of the user is greater than or equal to the first preset amplitude, the passenger environment device may be controlled to perform the corresponding operation.

With reference to the first aspect, in some implementations of the first aspect, the plurality of devices include a vehicle body control apparatus, a display apparatus, and a passenger environment device. Controlling, based on whether the motion information, the road condition information, and the physiological feature information satisfy the preset condition, at least the part of the plurality of devices to perform the corresponding operation includes: when the motion information satisfies the preset condition but the physiological feature information does not satisfy the preset condition, controlling the vehicle body control apparatus to perform the corresponding operation.

According to the foregoing technical solution, when it is detected that the motion information satisfies the preset condition but the physiological feature information does not satisfy the preset condition, the vehicle body control apparatus may be controlled to perform the carsickness prevention operation. In this way, when the motion information of the vehicle may cause the user to have a carsickness symptom, but the user does not obviously show the carsickness symptom, the vehicle body control apparatus can be controlled to perform the corresponding operation, so that the user can be prevented, while minimizing disturbance to the user, from having the carsickness symptom. This helps improve the driving and riding experience of the user.

In some possible implementations, controlling the vehicle body control apparatus to perform the corresponding operation includes at least one of the following: controlling an acceleration mode of the vehicle to be an economy mode, controlling energy regeneration intensity to be reduced, controlling a vehicle body height to be reduced, or controlling a comfort braking mode to be enabled.

With reference to the first aspect, in some implementations of the first aspect, the user is located in a first area in the vehicle, and at least the part of the devices are associated with the first area.

According to the foregoing technical solution, the vehicle may control a carsickness prevention device in the area in which the user is located to perform the carsickness prevention operation. In this way, the carsickness symptom of the user in the corresponding area can be relieved. This helps improve the driving and riding experience of the user.

In some possible implementations, the user is located in the first area in the vehicle. Controlling, based on the motion information, the road condition information, and the physiological feature information, the carsickness prevention device in the vehicle to perform the corresponding operation includes: when the physiological feature information of the user satisfies the preset condition, controlling the display apparatus and the passenger environment device in the first area to perform the corresponding carsickness prevention operation.

In some possible implementations, controlling the display apparatus and the passenger environment device in the first area to perform the corresponding carsickness prevention operation includes at least one of the following: controlling a vehicle window of the first area to be opened, controlling a running mode of an air conditioner of the first area to be adjusted to a face-level mode, controlling a fragrance device of the first area to be turned on, controlling a display parameter of the display apparatus in the first area, or controlling to start an air purification apparatus in the first area.

In some possible implementations, the cabin of the vehicle includes a plurality of users. The plurality of users include a first user and a second user, the first user is located in the first area, and the second user is located in a second area. Controlling, based on the motion information, the road condition information, and the physiological feature information, the carsickness prevention device in the vehicle to perform the corresponding operation includes: when physiological feature information of the first user satisfies the preset condition but physiological feature information of the second user does not satisfy the preset condition, controlling a carsickness prevention device in the first area to perform a radical carsickness prevention operation and controlling a carsickness prevention device in the second area to perform an incremental carsickness prevention operation.

For example, the first user is located in a second-row left-side area, and the second user is located in a second-row right-side area. Before the carsickness prevention operation is performed, a vehicle window of the second-row left-side area and a vehicle window of the second-row right-side area are in a closed state, and brightness of a display of the second-row left-side area and brightness of a display of the second-row right-side area are 100%. Controlling the carsickness prevention device in the first area to perform the radical carsickness prevention operation includes: opening the vehicle window of the second-row left-side area to 50%, and controlling the brightness of the display of the second-row left-side area to be dimmed to 50%. Controlling the carsickness prevention device in the second area to perform the incremental carsickness prevention operation includes: opening the vehicle window of the second-row right-side area to 90%, and controlling the brightness of the display of the second-row right-side area to be dimmed to 70%.

With reference to the first aspect, in some implementations of the first aspect, controlling, based on whether the motion information, the road condition information, and the physiological feature information satisfy the preset condition, at least the part of the plurality of devices to perform the corresponding operation includes: when at least a part of the motion information, the road condition information, and the physiological feature information satisfies the preset condition, controlling a prompt apparatus to prompt the user to start at least the part of the devices; and controlling, based on a first input of the user, to start at least the part of the devices. The first input indicates to start at least the part of the devices.

According to the foregoing technical solution, the user is prompted, through the prompt apparatus, to start the carsickness prevention device, and there is no need for the user to actively start the carsickness prevention device. This helps avoid complex operations of the user, thereby helping improve the driving and riding experience of the user.

With reference to the first aspect, in some implementations of the first aspect, the road condition information includes location information. The location information indicates that the carsickness prevention device is started when the vehicle passes through a first road section previously. Controlling, based on the motion information, the road condition information, and the physiological feature information, the carsickness prevention device in the vehicle to perform the corresponding operation includes: before the road condition information indicates that the vehicle passes through the first road section again, controlling the prompt apparatus to prompt the user to start the carsickness prevention device.

According to the foregoing technical solution, the road condition information may include a correspondence between a road section and whether the carsickness prevention device is started on the road section. If the vehicle detects that the user starts the carsickness prevention device when the vehicle passes through the first road section previously, before the vehicle passes through the first road section next time, the vehicle may actively prompt the user to start the carsickness prevention device. In this case, the correspondence is stored, so that there is no need for the user to actively start the carsickness prevention device. This helps avoid complex operations of the user, thereby helping improve the driving and riding experience of the user.

In some possible implementations, the road condition information may further include a correspondence between the road section and a type of a carsickness prevention device started by the user on the road section.

For example, the road condition information may further include a correspondence between a road section 1 and the vehicle body control apparatus and a correspondence between a road section 2 and the vehicle body control apparatus and the display apparatus.

With reference to the first aspect, in some implementations of the first aspect, the road condition information includes road surface information. The road surface information indicates that the carsickness prevention device is started when the vehicle passes through a road section of a first type previously. Controlling, based on the motion information, the road condition information, and the physiological feature information, the carsickness prevention device in the vehicle to perform the corresponding operation includes: before the road condition information indicates that the vehicle passes through the road section of the first type again, controlling the prompt apparatus to prompt the user to start the carsickness prevention device.

According to the foregoing technical solution, the road condition information may store a correspondence between a type of the road section and whether to start the carsickness prevention device for the type of the road section. For example, if the vehicle detects that the user starts the carsickness prevention device when passing through a road section with continuous curves previously, before passing through the road section with continuous curves next time, the vehicle may actively prompt the user to start the carsickness prevention device. In this case, the correspondence is stored, so that there is no need for the user to actively start the carsickness prevention device. This helps avoid complex operations of the user, thereby helping improve the driving and riding experience of the user.

In some possible implementations, the road condition information may further include a correspondence between the type of the road section and a type of a carsickness prevention device started by the user on the type of the road section.

For example, the road condition information may further include a correspondence between the road section with continuous curves and the vehicle body control apparatus and a correspondence between a damaged road section, and the vehicle body control apparatus and the display apparatus.

With reference to the first aspect, in some implementations of the first aspect, the motion information includes a first MSDV. Controlling, based on the motion information, the road condition information, and the physiological feature information, the carsickness prevention device in the vehicle to perform the corresponding operation includes: when the first MSDV is greater than or equal to a first preset threshold, controlling the prompt apparatus to prompt the user to start the carsickness prevention device; and based on a second input of the user, controlling not to start the carsickness prevention device, and establishing an association relationship between the user and a second preset threshold. The second preset threshold is determined based on the first MSDV, and the second input indicates not to start the carsickness prevention device.

According to the foregoing technical solution, because different users have different tolerances to carsickness, the correspondence between the user and the preset threshold may be established. For example, for a user with a high tolerance to the carsickness, the user may be prompted when the MSDV is high. For another example, for a user with a low tolerance to the carsickness, the user may be prompted when the MSDV is low. In this way, accurate control can be implemented for different users. This helps improve intelligence of the vehicle.

With reference to the first aspect, in some implementations of the first aspect, the method further includes: obtaining other motion information of the vehicle, where the other motion information includes a second MSDV of the vehicle during presence of the user in the vehicle; and when the second MSDV is greater than or equal to the second preset threshold, controlling the prompt apparatus to prompt the user to start the carsickness prevention device.

Controlling to start the carsickness prevention device may be understood as controlling the carsickness prevention device to perform the carsickness prevention operation. Controlling not to start the carsickness prevention device includes controlling the carsickness prevention device to keep a current state unchanged.

According to a second aspect, a carsickness prevention apparatus is provided. The apparatus includes: an obtaining unit, configured to obtain motion information of a vehicle, road condition information, and physiological feature information of a user; and a control unit, configured to control, based on the motion information, the road condition information, and the physiological feature information, a carsickness prevention device in the vehicle to perform a corresponding operation.

With reference to the second aspect, in some implementations of the second aspect, the carsickness prevention device includes a plurality of devices. The control unit is configured to: control, based on whether the motion information, the road condition information, and the physiological feature information satisfy a preset condition, at least a part of the plurality of devices to perform the corresponding operation.

With reference to the second aspect, in some implementations of the second aspect, the plurality of devices include a vehicle body control apparatus, a display apparatus, and a passenger environment device. The control unit is configured to: when the physiological feature information satisfies the preset condition, control the vehicle body control apparatus, the display apparatus, and the passenger environment device to perform the corresponding operation.

With reference to the second aspect, in some implementations of the second aspect, the plurality of devices include a vehicle body control apparatus, a display apparatus, and a passenger environment device. The control unit is configured to: when the motion information satisfies the preset condition but the physiological feature information does not satisfy the preset condition, control the vehicle body control apparatus to perform the corresponding operation.

With reference to the second aspect, in some implementations of the second aspect, the user is located in a first area in the vehicle, and at least the part of the devices are associated with the first area.

With reference to the second aspect, in some implementations of the second aspect, the control unit is configured to: when at least a part of the motion information, the road condition information, and the physiological feature information satisfies the preset condition, control a prompt apparatus to prompt the user to start at least the part of the devices; and control, based on a first input of the user, to start at least the part of the devices. The first input indicates to start at least the part of the devices.

With reference to the second aspect, in some implementations of the second aspect, the road condition information includes location information. The location information indicates that the carsickness prevention device is started when the vehicle passes through a first road section previously. The control unit is configured to: before it is detected that the vehicle passes through the first road section again, control the prompt apparatus to prompt the user to start the carsickness prevention device.

With reference to the second aspect, in some implementations of the second aspect, the road condition information includes road surface information. The location information indicates that the carsickness prevention device is started when the vehicle passes through a road section of a first type previously. The control unit is configured to: before it is detected that the vehicle passes through the road section of the first type again, control the prompt apparatus to prompt the user to start the carsickness prevention device.

With reference to the second aspect, in some implementations of the second aspect, the motion information includes a first motion sickness dose value MSDV. The control unit is configured to: when the first MSDV is greater than or equal to a first preset threshold, control the prompt apparatus to prompt the user to start the carsickness prevention device; and based on a second input of the user, control not to start the carsickness prevention device, and establish an association relationship between the user and a second preset threshold. The second preset threshold is determined based on the first MSDV, and the second input indicates not to start the carsickness prevention device.

With reference to the second aspect, in some implementations of the second aspect, the obtaining unit is further configured to obtain other motion information of the vehicle. The other motion information includes a second MSDV of the vehicle during presence of the user in the vehicle. The control unit is further configured to: when the second MSDV is greater than or equal to the second preset threshold, control the prompt apparatus to prompt the user to start the carsickness prevention device.

According to a third aspect, a carsickness prevention apparatus is provided. The apparatus includes a processing unit and a storage unit. The storage unit is configured to store instructions, and the processing unit executes the instructions stored in the storage unit, to enable the apparatus to perform any possible method according to the first aspect.

According to a fourth aspect, a carsickness prevention system is provided. The system includes a prompt apparatus and a computing platform. The computing platform includes any possible apparatus according to the second aspect or the third aspect.

According to a fifth aspect, a vehicle is provided. The vehicle includes any possible apparatus according to the second aspect, includes the apparatus according to the third aspect, or includes the system according to the fourth aspect.

According to a sixth aspect, a computer program product is provided. The computer program product includes computer program code. When the computer program code is run on a computer, the computer is enabled to perform any possible method according to the first aspect.

It should be noted that all or a part of the computer program code may be stored in a first storage medium. The first storage medium may be packaged together with a processor, or may be packaged separately from a processor. This is not specifically limited in embodiments of this application.

According to a seventh aspect, a computer-readable medium is provided. The computer-readable medium stores program code. When the computer program code is run on a computer, the computer is enabled to perform any possible method according to the first aspect.

According to an eighth aspect, an embodiment of this application provides a chip system. The chip system includes a processor configured to invoke a computer program or computer instructions stored in a memory, to enable the processor to perform any possible method according to the first aspect.

With reference to the eighth aspect, in a possible implementation, the processor is coupled to the memory through an interface.

With reference to the eighth aspect, in a possible implementation, the chip system further includes the memory, and the memory stores the computer program or the computer instructions.

### BRIEF DESCRIPTION OF DRAWINGS

FIG. 1 is a functional block diagram of a vehicle according to an embodiment of this application;
FIG. 2 is a block diagram of a system architecture according to an embodiment of this application;
FIG. 3A and FIG. 3B show a graphical user interface GUI according to an embodiment of this application;
FIG. 4(a)-1 to FIG. 4(b) show a group of GUIs according to an embodiment of this application;
FIG. 5 is another block diagram of a system architecture according to an embodiment of this application;
FIG. 6 is a schematic flowchart of a carsickness prevention method according to an embodiment of this application; and
FIG. 7 is a block diagram of a carsickness prevention apparatus according to an embodiment of this application.

### DESCRIPTION OF EMBODIMENTS

The following describes the technical solutions in embodiments of this application with reference to accompanying drawings in embodiments of this application. In description in embodiments of this application, "/" means "or" unless otherwise specified. For example, A/B may indicate A or B. In this specification, "and/or" describes only an association relationship for describing associated objects and indicates that three relationships may exist. For example, A and/or B may indicate the following three cases: Only A exists, both A and B exist, and only B exists. "At least one" means one or more. For example, "at least one of A and B ", similar to "A and/or B", describes an association relationship between associated objects and indicates that three relationships may exist. For example, at least one of A and B may indicate the following three cases: Only A exists, both A and B exist, and only B exists.

Prefix words "first", "second", and the like in embodiments of this application are merely intended to distinguish between different objects, and impose no limitation on locations, sequences, priorities, quantities, content, or the like of the described objects. In embodiments of this application, use of a prefix word, for example, an ordinal number, for distinguishing between the described objects does not constitute a limitation on the described objects. For descriptions of the described objects, refer to the descriptions in the context in the claims or embodiments. Use of such a prefix word should not constitute a redundant limitation. In addition, in the descriptions of embodiments, unless otherwise specified, "a plurality of" means two or more.

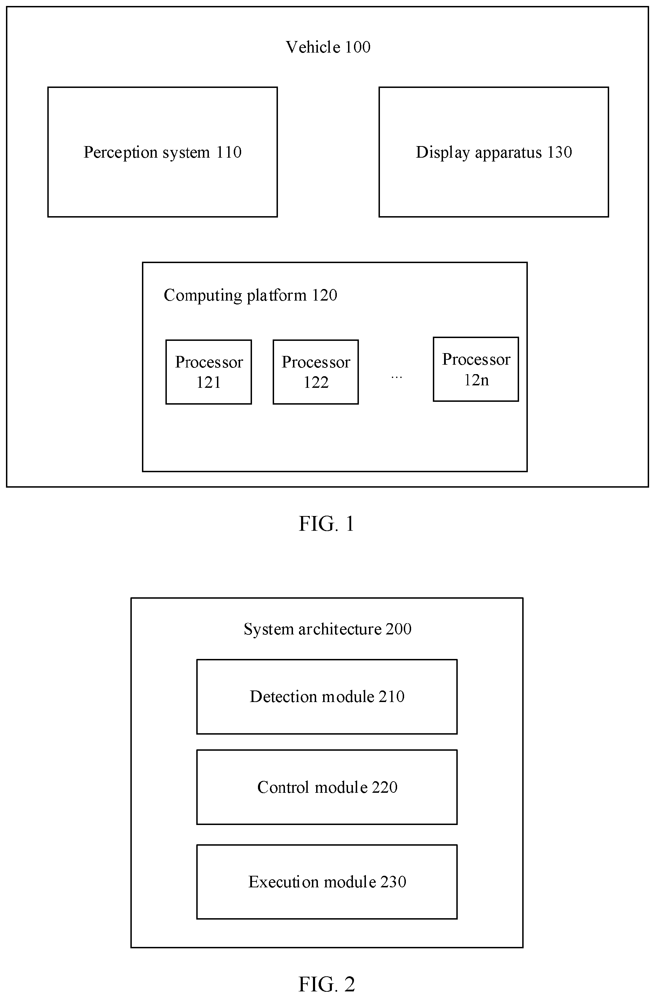

FIG. 1 is a functional block diagram of a vehicle 100 according to an embodiment of this application. The vehicle 100 may include a perception system 110, a computing platform 120, and a display apparatus 130. The perception system 110 may include one or more sensors for sensing information about an environment around the vehicle 100. For example, the perception system 110 may include a positioning system. The positioning system may be a global positioning system (global positioning system, GPS), a BeiDou system, or another positioning system. For another example, the perception system 110 may include one or more of an inertial measurement unit (inertial measurement unit, IMU), an acceleration sensor, a lidar, a millimeter-wave radar, an ultrasonic radar, and an image shooting apparatus. For example, the acceleration sensor may include a sensor for detecting an acceleration signal of an air suspension system, or may include a sensor for an acceleration signal of ESC.

A part of or all functions of the vehicle 100 may be controlled by the computing platform 120. The computing platform 120 may include one or more processors, for example, processors 121 to 12n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may achieve a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to achieve functions of a part or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). Moreover, the computing platform 120 may further include a memory. The memory is configured to store instructions, and a part or all of the processors 121 to 12n may invoke the instructions in the memory, to implement a corresponding function.

The display apparatus 130 in a cabin is mainly classified into two types: a first type is a vehicle-mounted display, and a second type is a projection display, for example, a head-up display (head-up display, HUD) apparatus. The vehicle-mounted display is a physical display, and is an important part of an in-vehicle infotainment system. A plurality of displays may be disposed in the cabin, for example, a digital dashboard display, a central display screen, a display in front of a passenger at a front passenger seat (also referred to as a front-row passenger), a display in front of a rear-row left-side passenger, and a display in front of a rear-row right-side passenger. Even a vehicle window may be used as a display for display. Head-up display, also referred to as a head-up display system, is mainly configured to display driving information such as a speed and navigation on a display device (for example, a windshield) in front of a driver, to reduce sight line diversion time of the driver, avoid a pupil change caused by sight line diversion of the driver, and improve traveling safety and comfort. For example, the HUD includes a combiner head-up display (combiner-HUD, C-HUD) system, a windshield head-up display (windshield-HUD, W-HUD) system, and an augmented reality head-up display (augmented reality HUD, AR-HUD) system. It should be understood that the HUD may also have another type of system with technology evolution. This is not limited in this application.

The foregoing display apparatus 130 is described by using the vehicle-mounted display and the projection display as examples. This embodiment of this application is not limited thereto. For example, the display apparatus 130 may alternatively be a light display or a projection screen.

FIG. 2 is a block diagram of a system architecture 200 according to an embodiment of this application. As shown in FIG. 2, the system architecture 200 includes a detection module 210, a control module 220, and an execution module 230. The execution module 230 may include a plurality of submodules, such as a vehicle body control apparatus, a display apparatus, and a passenger environment device. The vehicle body control apparatus includes an air spring, a shock absorber, a brake system, a power system (for acceleration and energy regeneration), a seat, and the like. One or more devices in the vehicle body control apparatus are controlled, so that a motion status of a vehicle can be controlled, and therefore, motion stimuli can be reduced. The display apparatus may include a display, a curtain, an atmosphere light, and the like. When a user uses the screen and the curtain, a visual conflict present when the user views the screen may be relieved by adjusting an angle of the screen, a screen display parameter, and the like. The passenger environment device may include a device that can improve travel environment factor of the user, for example, an air conditioner, a fragrance device, or a music play device.

Adjusting the angle of the screen or the display parameter may make the head to keep naturally upright when the user views the screen. For example, the control module 220 may adjust a laser projection picture to move upward from a lower location in a displayable area of the curtain, so that the user changes from lowering the head to keeping the head upright.

The detection module 210 may be configured to collect physiological feature information of a user in a cabin, road condition information, and motion information of the vehicle. For example, the physiological feature information may include one or more of data collected by a wearable device (for example, a band, a watch, a head-mounted device, or a virtual reality (virtual reality, VR) device), an image captured by a camera in the cabin, or voice information collected by a microphone. The data collected by the wearable device may include information that can represent a carsickness degree of the user, for example, a heart rate, blood oxygen saturation, and electroencephalogram. The image captured by the camera in the cabin may include facial feature information of the user (for example, the facial feature information may represent information such as yawning, nausea, vomiting, and eye movement of the user). The voice information collected through the microphone may include key phrases about carsickness, for example, key voice information such as "I feel a bit dizzy", "I feel even dizzier", or "I feel a little nauseous".

The road condition information may include data collected through a camera or radar outside the cabin or the like, or may include one or more of navigation information. For example, road information such as a mountain road, a continuous curve, or a construction road section may be determined based on the data collected through the camera or radar outside the cabin or the navigation information.

The motion information may include one or more of acceleration of the vehicle, seat pressure of a seat, a vehicle speed sensor, a pedal signal, a steering wheel angle, and an angular velocity. The detection module 210 may send the collected data to the control module 220. The control module 220 may control, based on the data sent by the detection module 210, the execution module 230 to perform a corresponding operation.

For example, when the motion information of the vehicle and the physiological feature information of the user satisfy a preset condition, all devices in the execution module 230 may be controlled to perform the corresponding operation. For example, when only the motion information of the vehicle satisfies the preset condition, the vehicle body control apparatus in the execution module 230 may be controlled to perform the corresponding operation.

For example, the preset condition includes a preset condition for physiological feature information, a preset condition for road condition information, and a preset condition for motion information.

For example, the preset condition for the physiological feature information includes but is not limited to at least one of the following:
(1) voice information sent by the user includes the key phrases about carsickness;
(2) a heart rate fluctuation amplitude of the user is greater than or equal to a first preset amplitude; a heart rate variability time-domain indicator of the user decreases by a change amplitude greater than or equal to a first preset amplitude; a heart rate variability low-frequency component of the user increases by an increase amplitude greater than or equal to a third preset amplitude; or a heart rate variability high-frequency component of the user decreases by a decrease amplitude greater than or equal to a fourth preset amplitude; or
(3) the user performs an action, for example, yawning, feeling nauseous, or vomiting.

When the physiological feature information of the user satisfies any one or more of the preset conditions, the control module 220 may determine that the physiological feature information of the user satisfies a preset condition corresponding to the physiological feature information of the user.

For another example, the preset condition for the road condition information includes but is not limited to at least one of the following:
(1) the vehicle is on a continuous curve; and
(2) the vehicle is on a damaged road or a construction road section.

For another example, the preset condition for the motion information includes but is not limited to at least one of the following:
(1) a quantity of times that the vehicle experiences sudden acceleration, sudden deceleration, or sharp steering within preset duration is greater than or equal to a preset quantity of times; and
(2) an MSDV is greater than or equal to a preset threshold.

For example, for whether the physiological feature information, the road condition information, and the motion information satisfy the preset condition, the control module may classify the carsickness degree of the user into different carsickness degrees. For example, Table 1 shows a manner of classifying the carsickness degree.

**Table 1**

| Carsickness degree | Satisfied preset condition |
|---|---|
| High | Physiological feature information, motion information, and road condition information all satisfy the preset condition. |
| Medium | Motion information and road condition information satisfy the preset condition. |
| Low | Only motion information satisfies the preset condition. |
| ... | ... |

For example, when determining, based on the data collected by the detection module 210, that the heart rate fluctuation amplitude of the user is greater than or equal to the first preset amplitude, the vehicle is currently on the continuous curve, and the MSDV is greater than the preset threshold, the control module 220 may determine that a current carsickness degree of the user is high. The control module 220 may control, based on a correspondence between the carsickness degree and the execution module, a corresponding device to perform a carsickness prevention operation. For example, Table 2 shows a correspondence between the carsickness degree and a device.

**Table 2**

| Carsickness degree | Device |
|---|---|
| High | Vehicle body control apparatus, display apparatus, and passenger environment device |
| Medium | Vehicle body control apparatus and passenger environment device |
| Low | Vehicle body control apparatus |
| ... | ... |

For example, when determining that the carsickness degree of the user is high, the control module 220 may control the vehicle body control apparatus, the display apparatus, and the passenger environment device to operate. For example, the control module 220 may control the vehicle to enable comfort braking, control a vehicle body height to decrease, control an angle of the display, and control the fragrance device to be turned on.

For example, when determining that the carsickness degree of the user is low, the control module 220 may control the vehicle body control apparatus to operate. For example, the control module 220 may control the vehicle to enable comfort braking and control the vehicle body height to decrease.

Table 1 and Table 2 are merely examples, and classification of the carsickness degree in this embodiment of this application is not limited thereto.

The foregoing embodiment is described by using an example in which the carsickness degree is determined based on the physiological feature information, the motion information, and the road condition information. This embodiment of this application is not limited thereto. For example, the carsickness degree may alternatively be determined based on the motion information.

For example, the carsickness degree is classified based on different MSDVs indicated by the motion information. For example, Table 3 shows a manner of classifying the carsickness degree.

**Table 3**

| Carsickness degree | MSDV |
|---|---|
| High | (3.3, 4] |
| Medium | (2.6, 3.3] |
| Low | [2, 2.6] |
| ... | ... |

The MSDVs in Table 3 are merely examples. This is not specifically limited in this embodiment of this application.

For example, when the MSDV is 3.5, the control module 220 may control the vehicle to enable comfort braking, control the vehicle body height to decrease, control the angle of the display, and control the fragrance device to be turned on.

For example, when the MSDV is 2.5, the control module 220 may control the vehicle to enable comfort braking and control the vehicle body height to decrease.

For example, the carsickness degree may alternatively be classified based on the physiological feature information. For example, Table 4 shows a manner of classifying the carsickness degree.

**Table 4**

| Carsickness degree | Physiological feature information |
|---|---|
| High | A user feels nauseous or vomits, or voice information sent by a user includes key phrases about carsickness. |
| Low | A heart rate fluctuation amplitude of a user is greater than or equal to a first preset amplitude. |
| ... | ... |

For example, when it is determined, based on data collected through the camera in the cabin, that the user feels nauseous or vomits, or when the key phrases about carsickness is recognized based on the voice information collected through the microphone, the control module 220 may control the vehicle to enable comfort braking, control the vehicle body height to decrease, control the angle of the display, and control the fragrance device to be turned on.

For example, when data sent by the wearable device indicates that a heart rate of the user is greater than or equal to a preset heart rate value, the control module 220 may control the vehicle to enable comfort braking and control the vehicle body height to decrease.

In an embodiment, before controlling the one or more devices to perform the carsickness prevention operation, the control module 220 may prompt, through a prompt apparatus, the user to enable a carsickness relief mode.

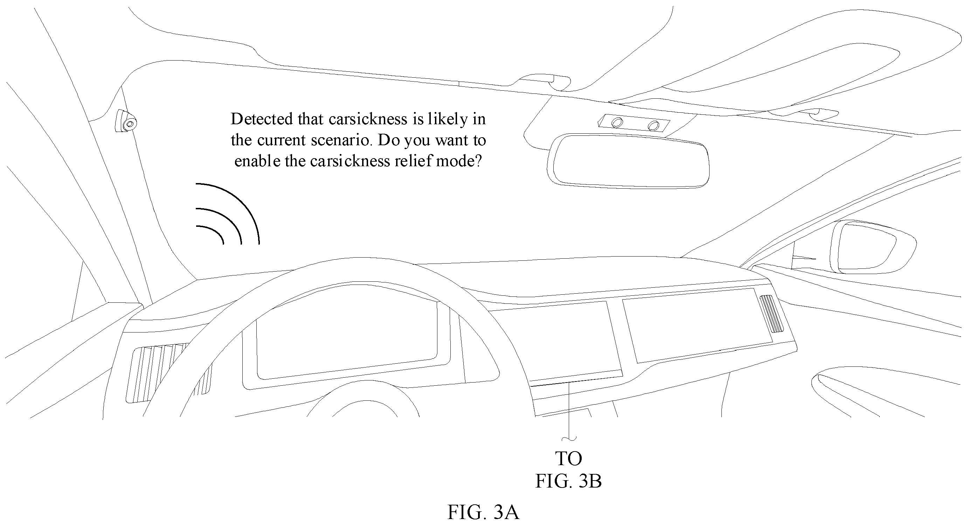

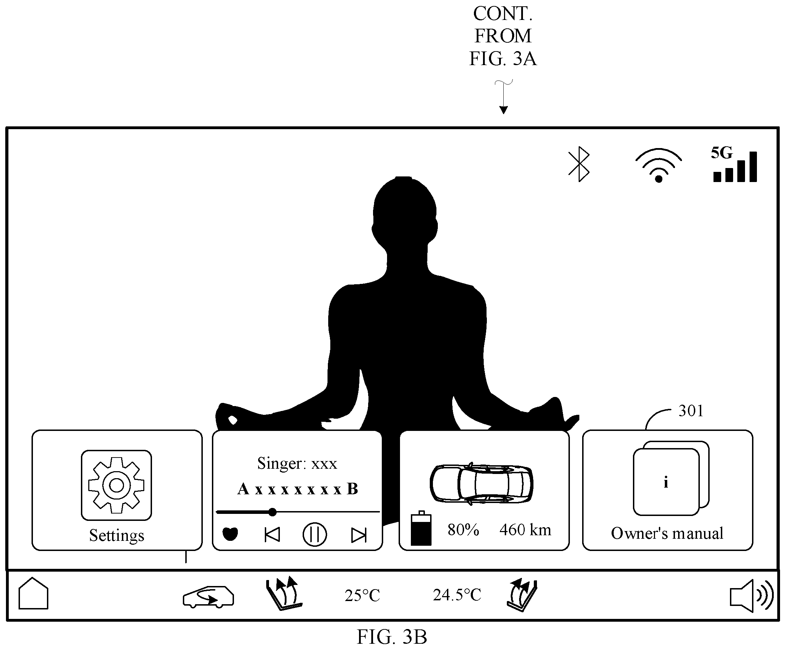

For example, FIG. 3A and FIG. 3B show a graphical user interface (graphical user interface, GUI) according to an embodiment of this application.

As shown in FIG. 3A and FIG. 3B, when detecting that the physiological feature information of the user, the road condition information, and the motion information of the vehicle satisfy the preset condition, the vehicle may prompt the user with "Detected that carsickness is likely in the current scenario. Do you want to enable the carsickness relief mode?" through a speaker. When detecting a voice instruction "enable the carsickness relief mode" sent by the user, the vehicle may enable comfort braking, control the vehicle body height to decrease, control the angle of the display, and control the fragrance device to be turned on.

In an embodiment, when traveling through a road section 1, the vehicle detects that the user actively enables the carsickness relief mode, or the user is prompted, through the prompt apparatus, to enable the carsickness relief mode, and the user determines to enable the carsickness relief mode. Before the vehicle passes through the road section 1 again, the user may be prompted with "The carsickness relief mode is enabled when the vehicle passes through the road section 1 last time. Do you want to enable the carsickness relief mode in advance?" through the prompt apparatus. When detecting the voice instruction "enable the carsickness relief mode" sent by the user, before passing the road section 1, the vehicle may, in advance, enable comfort braking, control the vehicle body height to decrease, control the angle of the display, and control the fragrance device to be turned on.

In an embodiment, the control module 220 may further correct the carsickness degree of the user. The carsickness degree and the MSDV shown in Table 3 are used as examples. When the MSDV (for example, 3.4) is greater than a first preset threshold (for example, 3.3), the control module 220 may control the speaker to make an alert tone "Detected that carsickness is likely in the current scenario. Do you want to enable the carsickness relief mode?". When detecting a voice instruction "do not enable the carsickness relief mode" sent by the user A, the vehicle may control a state of each carsickness prevention device to remain unchanged. In addition, the vehicle may establish an association relationship between identification information of a user A and a second preset threshold. The second preset threshold is greater than the first preset threshold. For example, the second preset threshold may be 3.4.

When the user A drives the vehicle to pass through another road section, if detecting that the MSDV is less than the second preset threshold, the vehicle may not perform the carsickness prevention operation; or if detecting that the MSDV (for example, 3.5) is greater than the second preset threshold, the vehicle may control the speaker to make the alert tone "Detected that carsickness is likely in the current scenario. Do you want to enable the carsickness relief mode?".

The foregoing describes a process in which, when determining that at least a part of the physiological feature information, the road condition information, and the motion information satisfy the preset condition, the vehicle actively performs the carsickness prevention operation or control the prompt apparatus to prompt the user to enable the carsickness relief mode. The following describes a process in which the user enables the carsickness relief mode by performing an operation.

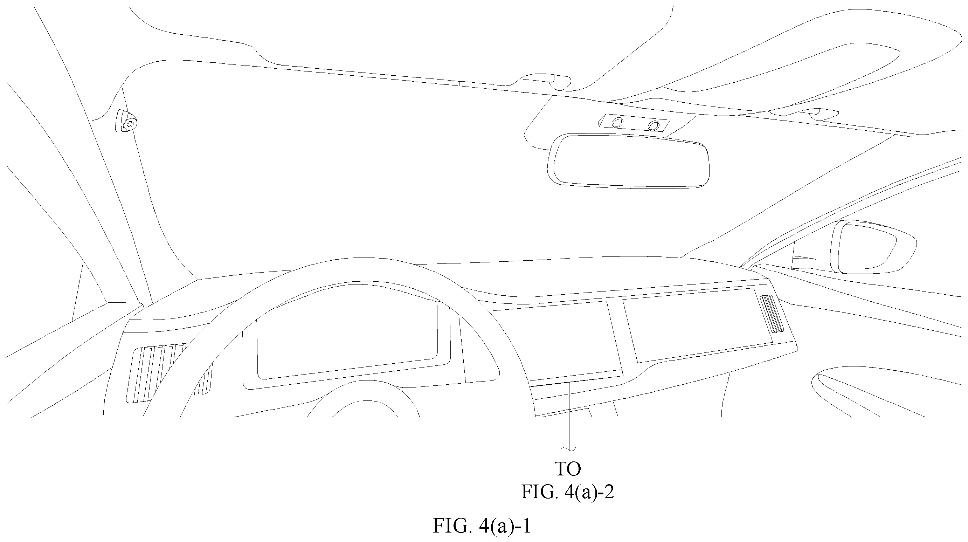

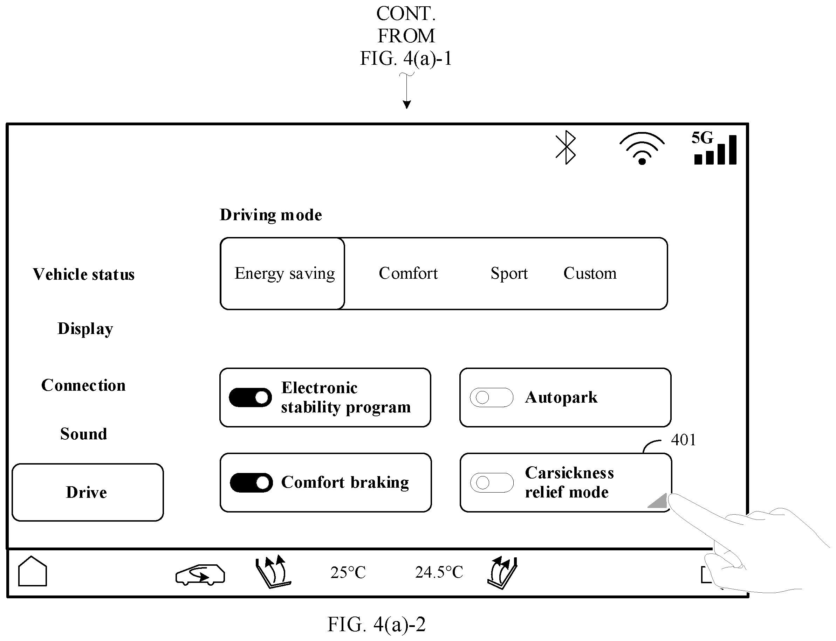

For example, FIG. 4(a)-1 to FIG. 4(b) show a group of GUIs according to an embodiment of this application.

A display interface of a driving tab shown in FIG. 4(a)-2 includes a carsickness relief mode control 401. When detecting an operation of enabling the carsickness relief mode by the user, the vehicle may control each device to perform a corresponding carsickness prevention operation.

In an embodiment, the user may further perform setting on a device that needs to be started.

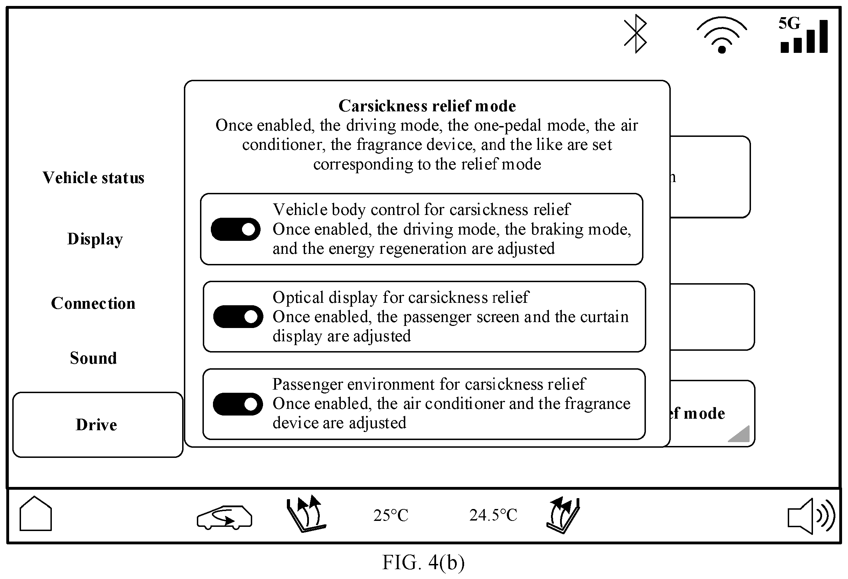

As shown in FIG. 4(a)-1 and FIG. 4(a)-2, when an operation of tapping a device selection control 402 by the user is detected, a GUI shown in FIG. 4(b) may be displayed through the display.

As shown in FIG. 4(b), the vehicle may display a carsickness relief mode setting interface. The setting interface includes three controls, which respectively correspond to enabling or disabling of vehicle body control for carsickness relief, enabling or disabling of optical display for carsickness relief, and enabling or disabling of passenger environment for carsickness relief. For example, the user may set the three controls to an on state and return to a previous page. When detecting, on the interface shown in FIG. 4(a)-2, that the user enables the carsickness relief mode, the vehicle may control the vehicle body control apparatus, the display apparatus, and the passenger environment device to perform the carsickness prevention operation.

For another example, the user sets the vehicle body control for carsickness relief and the optical display for carsickness relief to an enabled state, and sets the passenger environment for carsickness relief to a disabled state. When detecting, on the interface shown in FIG. 4(a)-2, that the user enables the carsickness relief mode, the vehicle may control the vehicle body control apparatus and the display apparatus to perform the carsickness prevention operation.

In an embodiment, if detecting that a user in a front passenger area enables the carsickness relief mode, the vehicle may control a carsickness prevention device in the front passenger area to perform a corresponding operation. For example, the vehicle may control at least one of the following: opening a vehicle window of the front passenger area to 90%, dimming brightness of a display of the front passenger area, adjusting a running mode of an air conditioner of the front passenger area to a face-level mode, and adjusting an angle of a seat in the front passenger area.

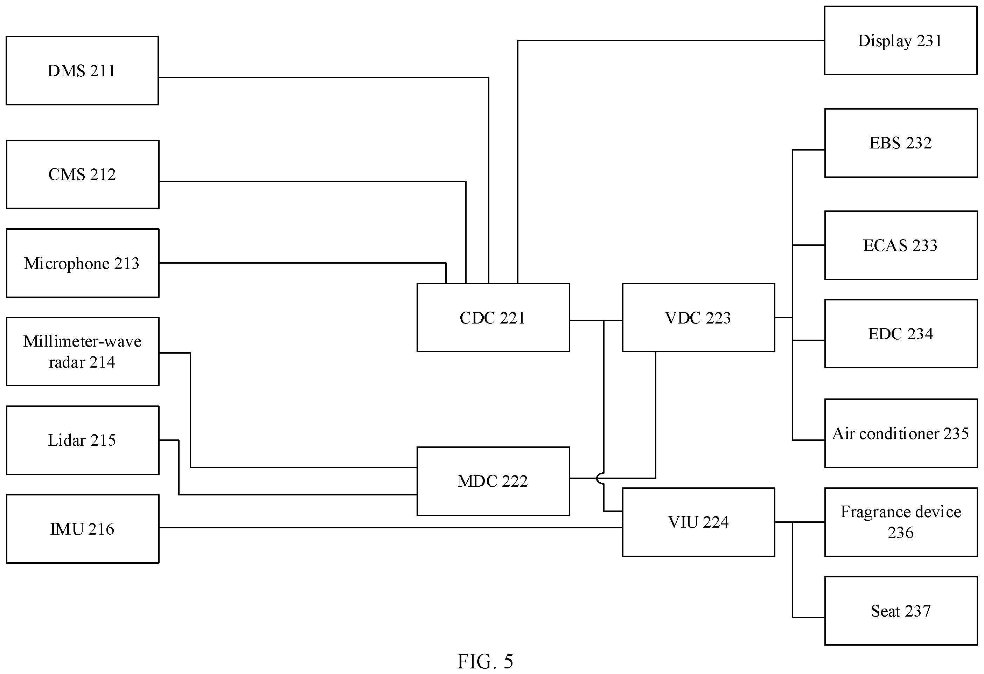

FIG. 5 is another block diagram of a system architecture according to an embodiment of this application. A detection module 210 may include a driver monitor system (driver monitor system, DMS) 211, a cabin monitor system (cabin monitor system, CMS) 212, a microphone 213, a millimeter-wave radar 214, a lidar 215, and an inertial measurement unit (inertial measurement unit, IMU) 216. A control module 220 may include an intelligent cockpit domain controller (cockpit domain controller, CDC) 221, an intelligent driving computing platform/mobile data center (mobile data center, MDC) 222, a vehicle domain controller (vehicle domain controller, VDC) 223, a vehicle integration unit (vehicle integration unit, VIU) 224, and the like. The CDC 221 may be configured to implement cabin control, the MDC 220 may be configured to achieve an autonomous or assisted driving function of a vehicle, and the VDC 223 may be configured to implement vehicle function control (for example, steering or braking). An execution module 230 may include a display 231, an electric brake system (electric brake system, EBS) 232, an electronically controlled air suspension (electronically controlled air suspension, ECAS) system 233, an electronic damping control (electronic damping control, EDC) system 234, an air conditioner 235, a fragrance device 236, a seat 237, and the like.

A sensor and an executor (for example, ECAS and EDC) may be locally connected to the VIU. As a communication interface unit, the VIU may be deployed at a location in which the sensor and the executor of the vehicle are densely located, so that the sensor and the executor of the vehicle may be locally connected. In addition, the VIU may have a specific computing and driving capability (for example, the VIU may absorb a driving computing function of a part of executors).

For example, data collected through a camera in the DMS 211 may be sent to the CDC 221, the CDC 221 may send the data collected through the camera to the VDC 223, and the VDC 223 may determine facial feature information of a user (for example, whether the user feels nauseous or vomits) based on the data collected through the camera. When determining that the user vomits, the VDC 223 may send an instruction 1 to the CDC 221. The instruction 1 instructs to control an angle of the display to be adjusted to an angle at which the display can be viewed when the user's head is naturally upright. When receiving the instruction 1, the CDC 221 may control the angle of the display to be adjusted to a target angle. The VDC 223 may also control an acceleration mode of the vehicle to be adjusted to an economy mode and control energy regeneration intensity to be reduced. The VDC 223 may further send an instruction 2 to the VIU 224. The instruction 2 instructs the fragrance device 236 to be turned on. After receiving the instruction 2, the VIU 224 may control the fragrance device 236 to be turned on.

The foregoing is described by using a ring network communication architecture as an example. This embodiment of this application is not limited thereto. A function achieved by the control module 220 may alternatively be achieved by a controller or a processor. This embodiment of this application is not limited thereto.

The mobile data center, the cockpit domain controller, the vehicle domain controller, a zone controller, the vehicle integration unit, and the like that are described in this embodiment of this application may further have other names. The MDC, the CDC, the VDC, the VIU, and the like are merely used as examples in this application, and are not intended to limit the specific implementation.

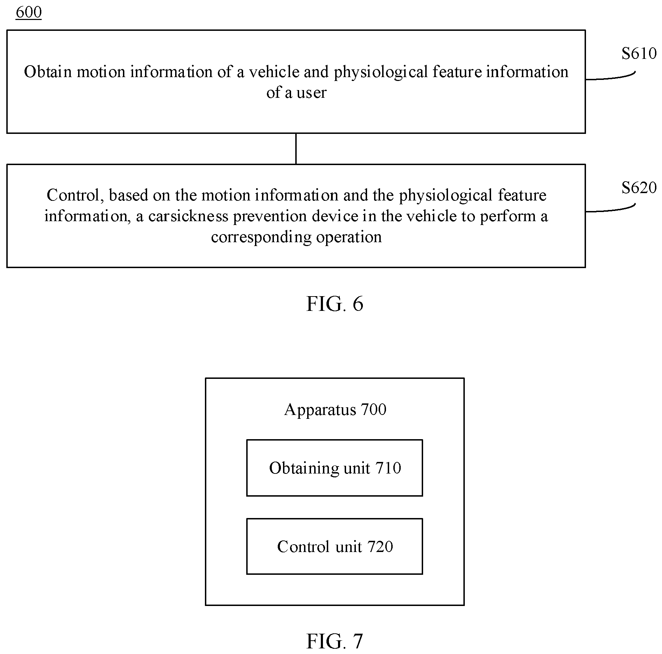

FIG. 6 is a schematic flowchart of a carsickness prevention method 600 according to an embodiment of this application. The method 600 may be performed by the foregoing vehicle 100, the method 600 may be performed by the foregoing computing platform 120, the method 600 may be performed by a system including the computing platform 120 and a prompt apparatus (for example, the display apparatus 130), the method 600 may be performed by a system-on-a-chip (system-on-a-chip, SoC) in the foregoing computing platform 120, the method 600 may be performed by a processor, a chip, or a circuit in the computing platform 120, or the method 600 may be performed by the foregoing control module 220. The method 600 includes the following steps.

S610: Obtain motion information of the vehicle and physiological feature information of a user.

Optionally, the motion information includes one or more of data collected by an acceleration sensor of the vehicle, seat pressure of a seat, data collected by a speed sensor, a pedal signal, a steering wheel angle, and an angular velocity.

For example, the data collected by the acceleration sensor may include an acceleration signal of an air suspension system or an acceleration signal of ESC.

Optionally, the motion information includes an MSDV.

Optionally, the physiological feature information includes information that can represent a carsickness degree, for example, a heart rate, blood oxygen saturation, and electroencephalogram of the user, and/or facial feature information or voice information of the user. For example, the facial feature information may include facial feature information such as yawning, nausea, vomiting, and eye movement of the user. For another example, the voice information may include key phrases about carsickness, for example, "I feel a bit dizzy".

Optionally, obtaining the physiological feature information includes: obtaining physiological feature information sent by a wearable device.

For example, a user A is located in a second-row left-side area in the vehicle, and a smartwatch of the user A establishes a short-range communication connection (for example, a Bluetooth connection or a SparkLink connection) with the vehicle. The smartwatch of the user A may send heart rate information of the user A to the vehicle. When determining that a heart rate fluctuation amplitude of the user A is greater than or equal to a first preset amplitude, the vehicle may determine an orientation of the smartwatch by using an angle of arrival (angle of arrival, AOA) technology. When it is determined that the smartwatch is located in the second-row left-side area in the vehicle, a vehicle window of the second-row left-side area may be controlled to be opened, a fragrance device of the second-row left-side area may be controlled to be turned on, and a running mode of an air conditioner of the second-row left-side area may be adjusted to a face-level mode, and the like.

Optionally, obtaining the physiological feature information includes: determining the physiological feature information based on data collected by a sensor in a cabin. The sensor in the cabin includes one or more of a camera, a radar, and a microphone in the cabin.

For example, the voice information of the user is collected through a plurality of microphones in the cabin. For example, a specific user B sends voice information "I feel a bit dizzy". The vehicle may determine a location of the user B based on the voice information collected through the plurality of microphones. For example, when it is determined that the user B is located in a second-row right-side area, a vehicle window of the second-row right-side area may be controlled to be opened, a fragrance device of the second-row right-side area may be controlled to be turned on, and a running mode of an air conditioner of the second-row right-side area may be adjusted to a face-level mode, and the like.

S620: Control, based on the motion information and the physiological feature information, a carsickness prevention device in the vehicle to perform a corresponding operation.

Optionally, the carsickness prevention device includes a plurality of devices. Controlling, based on the motion information and the physiological feature information, the carsickness prevention device in the vehicle to perform the corresponding operation includes: controlling, based on whether the motion information and the physiological feature information satisfy a preset condition, at least a part of the plurality of devices to perform the corresponding operation.

Optionally, the preset condition includes a preset condition for running information and a preset condition for physiological feature information.

For example, the preset condition for the running information includes but is not limited to at least one of the following: The voice information sent by the user includes the key phrases about carsickness; a heart rate fluctuation amplitude of the user is greater than or equal to the first preset amplitude; a heart rate variability time-domain indicator of the user decreases by a change amplitude greater than or equal to the first preset amplitude; a heart rate variability low-frequency component of the user increases by an increase amplitude greater than or equal to a third preset amplitude; a heart rate variability high-frequency component of the user decreases by a decrease amplitude greater than or equal to a fourth preset amplitude; or the user performs an action, for example, yawning, feeling nauseous, or vomiting.

For another example, the preset condition for the physiological feature information includes but is not limited to at least one of the following: A quantity of times that the vehicle experiences sudden acceleration, sudden deceleration, or sharp steering within preset duration is greater than or equal to a preset quantity of times; and the MSDV is greater than or equal to a preset threshold.

Optionally, the plurality of devices include a vehicle body control apparatus, a display apparatus, and a passenger environment device. Controlling, based on whether the motion information and the physiological feature information satisfy the preset condition, at least the part of the plurality of devices to perform the corresponding operation includes: when the physiological feature information satisfies the preset condition, controlling the vehicle body control apparatus, the display apparatus, and the passenger environment device to perform the corresponding operation.

Optionally, different preset conditions for the physiological feature information may correspond to different priorities. For example, a priority of the preset condition that the voice information sent by the user includes the key phrases about carsickness is high. For another example, a priority of the preset condition that the user performs the action, for example, yawning, feeling nauseous, or vomiting is medium. For another example, a priority of the preset condition that the heart rate fluctuation amplitude of the user is greater than or equal to the first preset amplitude is low.

When the physiological feature information satisfies preset conditions of different priorities, different devices may be controlled to perform corresponding carsickness prevention operations. For example, when it is detected that the voice information of the user includes the key phrases about carsickness, the vehicle body control apparatus, the display apparatus, and the passenger environment device may be controlled to perform the corresponding operation. For another example, when it is detected that the user performs the action, for example, yawning, feeling nauseous, or vomiting, the vehicle body control apparatus and the passenger environment device may be controlled to perform the corresponding operation. For another example, when it is detected that the heart rate fluctuation amplitude of the user is greater than or equal to the first preset amplitude, the passenger environment device may be controlled to perform the corresponding operation.

For example, Table 5 shows a recommended mode corresponding to each device in a carsickness relief mode.

**Table 5**

| Functional domain | Functional module | Recommended mode |
|---|---|---|
| Power | Acceleration mode | Economy |
| | Energy regeneration intensity | No |
| Chassis | Vehicle body height | Low |
| | Damper mode | Hard |
| | Braking mode | Comfort |
| Air conditioner | Running mode | Ventilation mode/Fresh air mode/Face-level mode |
| | Air purification | Started |
| Electrical | fragrance device | On |
| Display | Angle | Adjusted to an angle that the user can view when the user's head is naturally upright |
| ... | ... | ... |

Table 5 is merely an example. A type and a recommended mode of the carsickness prevention device are not specifically limited in embodiments of this application.

Optionally, the plurality of devices include the vehicle body control apparatus, the display apparatus, and the passenger environment device. Controlling, based on whether the motion information and the physiological feature information satisfy the preset condition, at least the part of the plurality of devices to perform the corresponding operation includes: when the motion information satisfies the preset condition but the physiological feature information does not satisfy the preset condition, controlling the vehicle body control apparatus to perform the corresponding operation.

For example, controlling the vehicle body control apparatus to perform the corresponding operation includes at least one of the following: controlling the acceleration mode of the vehicle to be the economy mode, controlling the energy regeneration intensity to be reduced, controlling the vehicle body height to be reduced, or controlling a comfort braking mode to be enabled.

Optionally, controlling, based on whether the motion information and the physiological feature information satisfy the preset condition, at least the part of the plurality of devices to perform the corresponding operation includes: when at least a part of the motion information and the physiological feature information satisfies the preset condition, controlling the prompt apparatus to prompt the user to start at least the part of the devices; and controlling, based on a first input of the user, to start at least the part of the devices. The first input indicates to start at least the part of the devices.

For example, as shown in FIG. 3A and FIG. 3B, when determining that at least the part of the motion information and the physiological feature information satisfies the preset condition, the vehicle may make a voice alert tone "Detected that carsickness is likely in the current scenario. Do you want to enable the carsickness relief mode?". When detecting a voice instruction "enable the carsickness relief mode" sent by the user, the vehicle may control the vehicle body control apparatus, the display apparatus, and the passenger environment device to perform the corresponding operation.

Prompting the user to enable the carsickness relief mode may be understood as prompting the user to start the carsickness prevention device. For selection of the carsickness prevention device, refer to the GUI shown in FIG. 4(b). Alternatively, the carsickness prevention device may be a default device of the vehicle. For example, the default device may include the vehicle body control apparatus, the display apparatus, and the passenger environment device.

Optionally, the method 600 further includes: obtaining road condition information. Controlling, based on the motion information and the physiological feature information, the carsickness prevention device in the vehicle to perform the corresponding operation includes: controlling, based on the motion information, the road condition information, and the physiological feature information, the carsickness prevention device in the vehicle to perform the corresponding operation.

For example, the road condition information may include information about a road section on which the vehicle is currently located, for example, a location and a type of the road section on which the vehicle is currently located.

For example, obtaining the road condition information includes: determining the road condition information based on data collected by a sensor outside the cabin; or determining the road condition information based on navigation information. For example, the sensor outside the cabin includes a camera and a radar outside the cabin.

For example, obtaining the road condition information includes: determining the road condition information based on the navigation information.

Optionally, controlling, based on the motion information, the road condition information, and the physiological feature information, the carsickness prevention device in the vehicle to perform the corresponding operation includes: when at least a part of the motion information, the road condition information, and the physiological feature information satisfies the preset condition, controlling the prompt apparatus to prompt the user to start at least the part of the devices; and controlling, based on the first input of the user, to start at least the part of the devices. The first input indicates to start at least the part of the devices.

For example, the preset condition may include a preset condition for road condition information. The preset condition for the road condition information includes but is not limited to at least one of the following: The vehicle is on a continuous curve; and the vehicle is on a damaged road or a construction road section.

For example, when it is detected that the vehicle is on the continuous curve, the MSDV is greater than or equal to the preset threshold, and the heart rate fluctuation amplitude of the user is greater than or equal to the first preset amplitude, the vehicle may control the vehicle body control apparatus, the display apparatus, and the passenger environment device to perform the corresponding operation.

Optionally, the user is located in a first area in the vehicle, and at least the part of the devices are associated with the first area.

Optionally, the user is located in the first area in the vehicle. Controlling, based on the motion information, the road condition information, and the physiological feature information, the carsickness prevention device in the vehicle to perform the corresponding operation includes: when the physiological feature information of the user satisfies the preset condition, controlling the vehicle body control apparatus to perform the carsickness prevention operation, and controlling the display apparatus and the passenger environment device in the first area to perform the corresponding carsickness prevention operation.

Optionally, controlling the display apparatus and the passenger environment device in the first area to perform the corresponding carsickness prevention operation includes at least one of the following: controlling a vehicle window of the first area to be opened, controlling a running mode of an air conditioner of the first area to be adjusted to the face-level mode, controlling a fragrance device of the first area to be turned on, controlling a display parameter of the display apparatus in the first area, or controlling to start an air purification apparatus in the first area.

Optionally, the cabin of the vehicle includes a plurality of users. The plurality of users include a first user and a second user, the first user is located in the first area, and the second user is located in a second area. Controlling, based on the motion information, the road condition information, and the physiological feature information, the carsickness prevention device in the vehicle to perform the corresponding operation includes: when physiological feature information of the first user satisfies the preset condition but physiological feature information of the second user does not satisfy the preset condition, controlling a carsickness prevention device in the first area to perform a radical carsickness prevention operation and controlling a carsickness prevention device in the second area to perform an incremental carsickness prevention operation.

For example, the first user is located in the second-row left-side area, and the second user is located in the second-row right-side area. Before the carsickness prevention operation is performed, the vehicle window of the second-row left-side area and the vehicle window of the second-row right-side area are in a closed state, and brightness of a display of the second-row left-side area and brightness of a display of the second-row right-side area are 100%. Controlling the carsickness prevention device in the first area to perform the radical carsickness prevention operation includes: opening the vehicle window of the second-row left-side area to 50%, and controlling the brightness of the display of the second-row left-side area to be dimmed to 50%. Controlling the carsickness prevention device in the second area to perform the incremental carsickness prevention operation includes: opening the vehicle window of the second-row right-side area to 90%, and controlling the brightness of the display of the second-row right-side area to be dimmed to 70%.

Optionally, the road condition information includes location information. The location information indicates that the carsickness prevention device is started when the vehicle passes through a first road section previously. Controlling, based on the motion information, the road condition information, and the physiological feature information, the carsickness prevention device in the vehicle to perform the corresponding operation includes: before the road condition information indicates that the vehicle passes through the first road section again, controlling the prompt apparatus to prompt the user to start the carsickness prevention device.

For example, Table 6 shows a correspondence between a road section and whether to start the carsickness prevention device.

**Table 6**

| Road section | Whether to start a carsickness prevention device |
|---|---|
| Road section 1 | Started |
| Road section 2 | Started |
| ... | ... |

For example, the road section 1 is a road section from home to a scenic spot A. In a process of traveling on the road section 1, if the vehicle detects that the user starts the carsickness prevention device or enables the carsickness relief mode, the vehicle may record the information. Before passing through the road section 1 again next time, the vehicle may make a voice alert tone "The carsickness relief mode was enabled the last time you passed through the road section 1. Do you want to enable it this time?" through a speaker. When detecting that the user sends the voice instruction "enable the carsickness relief mode", the vehicle may control the carsickness relief mode to be enabled.

Optionally, the road condition information includes road surface information. The road surface information indicates that the carsickness prevention device is started when the vehicle passes through a road section of a first type previously. Controlling, based on the motion information, the road condition information, and the physiological feature information, the carsickness prevention device in the vehicle to perform the corresponding operation includes: before the road condition information indicates that the vehicle passes through the road section of the first type again, controlling the prompt apparatus to prompt the user to start the carsickness prevention device.

For example, Table 7 shows a correspondence between a type of a road section and whether to start the carsickness prevention device.

**Table 7**

| Type of a road section | Whether to start a carsickness prevention device |
|---|---|
| Road section with continuous curves | Started |
| Damaged road section | Started |
| Gravel road section | Not started |
| ... | ... |

For example, a road section 2 is a road section from home to a scenic spot B, and the road section 2 is a road section with continuous curves. In a process of traveling on the road section 2, if the vehicle detects that the user starts the carsickness prevention device or enables the carsickness relief mode, the vehicle may record the information. Before passing through a road section 3 (for example, the road section 3 is also a road section with continuous curves) again next time, the vehicle may make a voice alert tone "The carsickness relief mode was enabled the last time you pass through the road section with continuous curves. Do you want to enable it this time?" through the speaker. When detecting that the user sends the voice instruction "enable the carsickness relief mode", the vehicle may control the carsickness relief mode to be enabled.

Optionally, the motion information includes a first motion sickness dose value MSDV. Controlling, based on the motion information, the road condition information, and the physiological feature information, the carsickness prevention device in the vehicle to perform the corresponding operation includes: when the first MSDV is greater than or equal to a first preset threshold, controlling the prompt apparatus to prompt the user to start the carsickness prevention device; and based on a second input of the user, controlling not to start the carsickness prevention device, and establishing an association relationship between the user and a second preset threshold. The second preset threshold is determined based on the first MSDV, and the second input indicates not to start the carsickness prevention device.

Optionally, the vehicle may determine the MSDV based on the data collected by the acceleration sensor.

Optionally, the first preset threshold may be obtained from a cloud server.

Optionally, for different users, the first preset threshold may vary. For example, for a male user, the first preset threshold may be 3, and for a female user, the first preset threshold may be 2.8.

For example, the user B is located in a driver area. In a process in which the user B drives the vehicle, when detecting that the MSDV (for example, 3.1) is greater than or equal to the first preset threshold (for example, 3), the vehicle may prompt the user B to enable the carsickness relief mode. When detecting that the user B sends a voice instruction "do not enable the carsickness relief mode", the vehicle may record a correspondence between identification information of the user B and the second preset threshold. For example, the vehicle may record a correspondence between facial information 1 of the user B and the second preset threshold.

For example, the second preset threshold may be determined based on the MSDV. For example, the second preset threshold may be equal to the MSDV.

For example, Table 8 shows a correspondence between a user and a preset threshold.

**Table 8**

| Identification information of a user | Preset threshold |
|---|---|
| Facial information 1 | 3.1 |
| Facial information 2 | 3.4 |
| ... | ... |

Because different users have different tolerances to carsickness, the correspondence between the identification information of the user and the preset threshold may be established. For example, for a user with a high tolerance to the carsickness, the user may be prompted when the MSDV is high. For another example, for a user with a low tolerance to the carsickness, the user may be prompted when the MSDV is low. In this way, accurate control can be implemented for different users. This helps improve intelligence of the vehicle.

Optionally, the method 600 further includes: obtaining other motion information of the vehicle, where the other motion information includes a second MSDV of the vehicle during presence of the user in the vehicle; and when the second MSDV is greater than or equal to the second preset threshold, controlling the prompt apparatus to prompt the user to start the carsickness prevention device.

For example, the user B is located in the driver area. In the process in which the user B drives the vehicle, when detecting that the MSDV (for example, 3.3) is greater than or equal to the second preset threshold (for example, 3.1), the vehicle may prompt the user B to enable the carsickness relief mode. When detecting that the user B sends a voice instruction "enable the carsickness relief mode", the vehicle may control the vehicle body control apparatus, the display apparatus, and the passenger environment device to perform the corresponding operation.

Alternatively, when detecting that the user B sends the voice instruction "do not enable the carsickness relief mode", the vehicle may record a correspondence between the identification information of the user B and a third preset threshold (for example, 3.3). The vehicle may update the correspondence shown in Table 8, for example, update the preset threshold corresponding to the facial information 1 to 3.3.

FIG. 7 is a block diagram of a carsickness prevention apparatus 700 according to an embodiment of this application. As shown in FIG. 7, the apparatus 700 includes: an obtaining unit 710, configured to obtain motion information of a vehicle, road condition information, and physiological feature information of a user; and a control unit 720, configured to control, based on the motion information, the road condition information, and the physiological feature information, a carsickness prevention device in the vehicle to perform a corresponding operation.

Optionally, the carsickness prevention device includes a plurality of devices. The control unit 720 is configured to control, based on whether the motion information, the road condition information, and the physiological feature information satisfy a preset condition, at least a part of the plurality of devices to perform the corresponding operation.

Optionally, the plurality of devices include a vehicle body control apparatus, a display apparatus, and a passenger environment device. The control unit 720 is configured to: when the physiological feature information satisfies the preset condition, control the vehicle body control apparatus, the display apparatus, and the passenger environment device to perform the corresponding operation.

Optionally, the plurality of devices include a vehicle body control apparatus, a display apparatus, and a passenger environment device. The control unit 720 is configured to: when the motion information satisfies the preset condition but the physiological feature information does not satisfy the preset condition, control the vehicle body control apparatus to perform the corresponding operation.

Optionally, the user is located in a first area in the vehicle, and at least the part of the devices are associated with the first area.

Optionally, the control unit 720 is configured to: when at least a part of the motion information, the road condition information, and the physiological feature information satisfies the preset condition, control a prompt apparatus to prompt the user to start at least the part of the devices; and control, based on a first input of the user, to start at least the part of the devices. The first input indicates to start at least the part of the devices.

Optionally, the road condition information includes location information. The location information indicates that the carsickness prevention device is started when the vehicle passes through a first road section previously. The control unit 720 is configured to: before the road condition information indicates that the vehicle passes through the first road section again, control the prompt apparatus to prompt the user to start the carsickness prevention device.

Optionally, the road condition information includes road surface information. The road surface information indicates that the carsickness prevention device is started when the vehicle passes through a road section of a first type previously. The control unit 720 is configured to: before the road condition information indicates that the vehicle passes through the road section of the first type again, control the prompt apparatus to prompt the user to start the carsickness prevention device.

Optionally, the motion information includes a first motion sickness dose value MSDV. The control unit is configured to: when the first MSDV is greater than or equal to a first preset threshold, control the prompt apparatus to prompt the user to start the carsickness prevention device; and based on a second input of the user, control not to start the carsickness prevention device, and establish an association relationship between the user and a second preset threshold. The second preset threshold is determined based on the first MSDV, and the second input indicates not to start the carsickness prevention device.

Optionally, the obtaining unit 710 is further configured to obtain other motion information of the vehicle. The other motion information includes a second MSDV of the vehicle during presence of the user in the vehicle. The control unit 720 is further configured to: when the second MSDV is greater than or equal to the second preset threshold, control the prompt apparatus to prompt the user to start the carsickness prevention device.

For example, the obtaining unit 710 may be the computing platform in FIG. 1, or a processing circuit, a processor, or a controller on the computing platform. For example, the obtaining unit 710 is a processor 121 on the computing platform. The processor 121 may obtain the motion information of the vehicle and the physiological feature information of the user. For example, the processor 121 may obtain first data (the first data may be used to determine the motion information) collected by a speed sensor and image information (the first image information may be used to determine the physiological feature information) captured by a camera in a cabin. For another example, the processor 121 may obtain second data (the second data may be used to determine the physiological feature information) sent by a wearable device.

For another example, the control unit 720 may be the computing platform in FIG. 1, or a processing circuit, a processor, or a controller on the computing platform. For example, the control unit 720 is a processor 122 on the computing platform. The processor 122 may control, based on the motion information and the physiological feature information that are obtained by the processor 121, the carsickness prevention device to perform the corresponding operation.

Functions achieved by the obtaining unit 710 and functions achieved by the control unit 7200 may be achieved by different processors, or may be achieved by a same processor. This is not limited in embodiments of this application.

It should be understood that division into units in the foregoing apparatus is merely logical function division. During actual implementation, all or some of the units may be integrated into one physical entity, or may be physically separated. In addition, the units in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units in the apparatus. For example, the processor is a general-purpose processor, for example, a CPU or a microprocessor, and the memory is a memory in the apparatus or a memory outside the apparatus. Alternatively, units in the apparatus may be implemented in a form of hardware circuit, and functions of some or all of the units may be implemented by designing the hardware circuit. The hardware circuit may be understood as one or more processors. For example, in an implementation, the hardware circuit is an ASIC, and the functions of some or all of the units are implemented by designing a logical relationship between elements in the circuit. For another example, in another implementation, the hardware circuit may be implemented through a PLD, for example, an FPGA. The FPGA may include a large quantity of logic gate circuits, and a connection relationship between the logic gate circuits is configured by using a configuration file, to implement the functions of some or all of the units. All units in the foregoing apparatuses may be implemented in a form of software invoked by the processor, all units may be implemented in a form of hardware circuit, or some units may be implemented in a form of software invoked by the processor, and a remaining unit may be implemented in a form of hardware circuit.

In embodiments of this application, the processor is a circuit having a signal processing capability. In an implementation, the processor may be a circuit having an instruction reading and running capability, for example, a CPU, a microprocessor, a GPU, or a DSP. In another implementation, the processor may achieve a specific function based on a logical relationship of a hardware circuit. The logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement hardware circuit configuration may be understood as a process in which the processor loads instructions to achieve functions of a part or all of the foregoing units. In addition, the processor may alternatively be a hardware circuit designed for artificial intelligence, and may be understood as an ASIC, for example, an NPU, a TPU, or a DPU.

It can be learned that the units in the foregoing apparatus may be configured as one or more processors (or processing circuits) for implementing the foregoing method, for example, a CPU, a GPU, an NPU, a TPU, a DPU, a microprocessor, a DSP, an ASIC, an FPGA, or a combination of at least two of these processor forms.

In addition, all or some of the units in the apparatus may be integrated, or may be implemented independently. In an implementation, these units are integrated and implemented in a form of SoC. The SoC may include at least one processor, configured to implement any one of the foregoing methods or achieve the functions of the units in the apparatus. Types of the at least one processor may be different. For example, the at least one processor includes a CPU and an FPGA, a CPU and an artificial intelligence processor, or a CPU and a GPU.

An embodiment of this application further provides a carsickness prevention apparatus. The apparatus includes a processing unit and a storage unit. The storage unit is configured to store instructions, and the processing unit executes the instructions stored in the storage unit, to enable the apparatus performs the method or the steps performed in the foregoing embodiments.

Optionally, if the apparatus is located in a vehicle, the processing unit may be the processors 121 to 12n shown in FIG. 1.

An embodiment of this application further provides a carsickness prevention system. The carsickness prevention system may include a computing platform and a prompt apparatus. The computing platform may include the foregoing apparatus 700.

An embodiment of this application further provides a vehicle. The vehicle may include the foregoing carsickness prevention apparatus or carsickness prevention system.

An embodiment of this application further provides a computer program product. The computer program product includes computer program code. When the computer program code is run on a computer, the computer is enabled to perform the method in the foregoing embodiments.

An embodiment of this application further provides a computer-readable medium. The computer-readable medium stores program code. When the computer program code is run on a computer, the computer is enabled to perform the method in the foregoing embodiments.

An embodiment of this application further provides a chip. The chip includes a circuit, and the circuit is configured to perform the method in the foregoing embodiments.

During implementation, steps in the foregoing method may be implemented through a hardware integrated logic circuit in a processor, or by using instructions in a form of software. The method disclosed with reference to embodiments of this application may be directly performed by a hardware processor, or may be performed by a combination of hardware and a software module in the processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and performs the steps in the foregoing method in combination with hardware of the processor. To avoid repetition, details are not described herein again.

It should be understood that, in this embodiment of this application, the memory may include a read-only memory and a random access memory, and provide instructions and data to the processor.

It should be further understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to achieve the described functions for each particular application, but it should not be considered that the implementation goes beyond the scope of this application.

It may be clearly understood by a person skilled in the art that, for the purpose of convenient and brief description, for a detailed operating process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual requirements to achieve the objectives of the solutions of embodiments.

In addition, functional units in embodiments of this application may be integrated into one processing unit, each of the units may exist alone physically, or two or more units are integrated into one unit.

When the functions are achieved in a form of software functional unit and sold or used as an independent product, the functions may be stored in a computer-readable storage medium. Based on such an understanding, the technical solutions of this application essentially, or the part contributing to the current technology, or some of the technical solutions may be implemented in a form of software product. The computer software product is stored in a storage medium, and includes several instructions for indicating a computer device (which may be a personal computer, a server, or a network device) to perform all or a part of the steps of the method described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A carsickness prevention method, comprising:
obtaining motion information of a vehicle, road condition information, and physiological feature information of a user; and
controlling, based on the motion information, the road condition information, and the physiological feature information, a carsickness prevention device in the vehicle to perform a corresponding operation.

2. The method according to claim 1, wherein the carsickness prevention device comprises a plurality of devices; and controlling, based on the motion information, the road condition information, and the physiological feature information, the carsickness prevention device in the vehicle to perform the corresponding operation comprises:
controlling, based on whether the motion information, the road condition information, and the physiological feature information satisfy a preset condition, at least a part of the plurality of devices to perform the corresponding operation.

3. The method according to claim 2, wherein the plurality of devices comprise a vehicle body control apparatus, a display apparatus, and a passenger environment device; and controlling, based on whether the motion information, the road condition information, and the physiological feature information satisfy the preset condition, at least the part of the plurality of devices to perform the corresponding operation comprises:
when the physiological feature information satisfies the preset condition, controlling the vehicle body control apparatus, the display apparatus, and the passenger environment device to perform the corresponding operation.

4. The method according to claim 2, wherein the plurality of devices comprise a vehicle body control apparatus, a display apparatus, and a passenger environment device; and controlling, based on whether the motion information, the road condition information, and the physiological feature information satisfy the preset condition, at least the part of the plurality of devices to perform the corresponding operation comprises:
when the motion information satisfies the preset condition but the physiological feature information does not satisfy the preset condition, controlling the vehicle body control apparatus to perform the corresponding operation.

5. The method according to any one of claims 2 to 4, wherein the user is located in a first area in the vehicle, and at least the part of the devices are associated with the first area.

6. The method according to any one of claims 2 to 5, wherein controlling, based on whether the motion information, the road condition information, and the physiological feature information satisfy the preset condition, at least the part of the plurality of devices to perform the corresponding operation comprises:
when at least a part of the motion information, the road condition information, and the physiological feature information satisfies the preset condition, controlling a prompt apparatus to prompt the user to start at least the part of the devices; and
controlling, based on a first input of the user, to start at least the part of the devices, wherein the first input indicates to start at least the part of the devices.

7. The method according to any one of claims 1 to 6, wherein the road condition information comprises location information, and the location information indicates that the carsickness prevention device is started when the vehicle passes through a first road section previously; and controlling, based on the motion information, the road condition information, and the physiological feature information, the carsickness prevention device in the vehicle to perform the corresponding operation comprises:
before the road condition information indicates that the vehicle passes through the first road section again, controlling the prompt apparatus to prompt the user to start the carsickness prevention device.

8. The method according to any one of claims 1 to 7, wherein the road condition information comprises road surface information, and the road surface information indicates that the carsickness prevention device is started when the vehicle passes through a road section of a first type previously; and controlling, based on the motion information, the road condition information, and the physiological feature information, the carsickness prevention device in the vehicle to perform the corresponding operation comprises:
before the road condition information indicates that the vehicle passes through the road section of the first type again, controlling the prompt apparatus to prompt the user to start the carsickness prevention device.

9. The method according to any one of claims 1 to 8, wherein the motion information comprises a first motion sickness dose value MSDV; and controlling, based on the motion information, the road condition information, and the physiological feature information, the carsickness prevention device in the vehicle to perform the corresponding operation comprises:
when the first MSDV is greater than or equal to a first preset threshold, controlling the prompt apparatus to prompt the user to start the carsickness prevention device; and
based on a second input of the user, controlling not to start the carsickness prevention device, and establishing an association relationship between the user and a second preset threshold, wherein the second preset threshold is determined based on the first MSDV, and the second input indicates not to start the carsickness prevention device.

10. The method according to claim 9, wherein the method further comprises:
obtaining other motion information of the vehicle, wherein the other motion information comprises a second MSDV of the vehicle during presence of the user in the vehicle; and
when the second MSDV is greater than or equal to the second preset threshold, controlling the prompt apparatus to prompt the user to start the carsickness prevention device.

11. A carsickness prevention apparatus, comprising:
an obtaining unit, configured to obtain motion information of a vehicle, road condition information, and physiological feature information of a user; and
a control unit, configured to control, based on the motion information, the road condition information, and the physiological feature information, a carsickness prevention device in the vehicle to perform a corresponding operation.

12. The apparatus according to claim 11, wherein the carsickness prevention device comprises a plurality of devices, and the control unit is configured to:
control, based on whether the motion information, the road condition information, and the physiological feature information satisfy a preset condition, at least a part of the plurality of devices to perform the corresponding operation.

13. The apparatus according to claim 12, wherein the plurality of devices comprise a vehicle body control apparatus, a display apparatus, and a passenger environment device, and the control unit is configured to:
when the physiological feature information satisfies the preset condition, control the vehicle body control apparatus, the display apparatus, and the passenger environment device to perform the corresponding operation.

14. The apparatus according to claim 12, wherein the plurality of devices comprise a vehicle body control apparatus, a display apparatus, and a passenger environment device, and the control unit is configured to:
when the motion information satisfies the preset condition but the physiological feature information does not satisfy the preset condition, control the vehicle body control apparatus to perform the corresponding operation.

15. The apparatus according to any one of claims 12 to 14, wherein the user is located in a first area in the vehicle, and at least the part of the devices are associated with the first area.

16. The apparatus according to any one of claims 12 to 15, wherein the control unit is configured to:
when at least a part of the motion information, the road condition information, and the physiological feature information satisfies the preset condition, control a prompt apparatus to prompt the user to start at least the part of the devices; and
control, based on a first input of the user, to start at least the part of the devices, wherein the first input indicates to start at least the part of the devices.

17. The apparatus according to any one of claims 11 to 16, wherein the road condition information comprises location information, the location information indicates that the carsickness prevention device is started when the vehicle passes through a first road section previously, and the control unit is configured to:
before the road condition information indicates that the vehicle passes through the first road section again, control the prompt apparatus to prompt the user to start the carsickness prevention device.

18. The apparatus according to any one of claims 11 to 17, wherein the road condition information comprises road surface information, the road surface information indicates that the carsickness prevention device is started when the vehicle passes through a road section of a first type previously, and the control unit is configured to:
before the road condition information indicates that the vehicle passes through the road section of the first type again, control the prompt apparatus to prompt the user to start the carsickness prevention device.

19. The apparatus according to any one of claims 11 to 18, wherein the motion information comprises a first motion sickness dose value MSDV, and the control unit is configured to:
when the first MSDV is greater than or equal to a first preset threshold, control the prompt apparatus to prompt the user to start the carsickness prevention device; and
based on a second input of the user, control not to start the carsickness prevention device, and establish an association relationship between the user and a second preset threshold, wherein the second preset threshold is determined based on the first MSDV, and the second input indicates not to start the carsickness prevention device.

20. The apparatus according to claim 19, wherein
the obtaining unit is further configured to obtain other motion information of the vehicle, wherein the other motion information comprises a second MSDV of the vehicle during presence of the user in the vehicle; and
the control unit is further configured to: when the second MSDV is greater than or equal to the second preset threshold, control the prompt apparatus to prompt the user to start the carsickness prevention device.

21. A carsickness prevention apparatus, comprising:
a memory, configured to store a computer program; and
a processor, configured to execute the computer program stored in the memory, to enable the apparatus to perform the method according to any one of claims 1 to 10.

22. A carsickness prevention system, comprising a prompt apparatus and a computing platform, wherein the computing platform comprises the apparatus according to any one of claims 11 to 21.

23. A vehicle, comprising the apparatus according to any one of claims 11 to 21 or the system according to claim 22.

24. A computer-readable storage medium, wherein the computer-readable storage medium stores a computer program; and when the computer program is executed by a computer, the method according to any one of claims 1 to 10 is performed.

25. A chip, wherein the chip comprises a processor and a data interface, and the processor reads, through the data interface, instructions stored in a memory, to perform the method according to any one of claims 1 to 10.
